# EUROPEAN PATENT SPECIFICATION

(11) **EP 4 246 310 B1**
(45) Date of publication and mention of the grant of the patent: **18.09.2024**
(21) Application number: 23161801.8
(22) Date of filing: 14.03.2023
(51) Int. Cl.: G06F 7/58, H04L 9/00

(54) **METHOD AND APPARATUS FOR ACQUIRING A RANDOM NUMBER FOR BLOCKCHAIN, DEVICE AND STORAGE MEDIUM**
VERFAHREN UND VORRICHTUNG ZUR ERFASSUNG EINER ZUFALLSZAHL FÜR BLOCKCHAIN, VORRICHTUNG UND SPEICHERMEDIUM
PROCÉDÉ ET APPAREIL D'ACQUISITION D'UN NOMBRE ALÉATOIRE POUR CHAÎNE DE BLOCS, DISPOSITIF ET SUPPORT DE STOCKAGE

(30) Priority: 15.03.2022 CN 202210250974
(43) Date of publication of application: 20.09.2023
(73) Proprietor: Beijing Baidu Netcom Science Technology Co., Ltd., Beijing 100085 (CN)
(72) Inventor: LIU, Xiaohe, Beijing 100085 (CN)
(74) Representative: Deambrogi, Edgardo

(56) References cited:
- WO-A1-2022/033811
- CN-A- 112 631 550

## Description

### TECHNICAL FIELD

The present disclosure relates to the field of computer technology and, in particular, to the blockchain technology and data trusted computing technology.

### BACKGROUND

Ablockchain can implement different business functions by deploying a variety of smart contracts. Among these business functions, there will be reliable application requirements developed based on random numbers, such as random winning in games, random allocation in resource management and the like.

The generation of random numbers requires reliable random sources, while there are few random sources available for smart contracts in the blockchain. The acquisition of random numbers requires two steps. The first step is to determine a random seed, and the second step is to process the random seed based on a random algorithm to generate the random number. Since the codes of the smart contract are public, the random algorithm used in the codes is also public. It means that the indeterminacy of the generation result of the random number depends on the random seed. Therefore, the improvement of the generation reliability of the random seed is of great significance to the reliability of the random number.

### SUMMARY

The present disclosure provides a method and apparatus for acquiring a random number for a blockchain, a device and a storage medium, so as to improve the reliability of random number generation.

In a first aspect, an embodiment of the present disclosure provides a method for acquiring a random number for a blockchain. The method is applied by a blockchain node and includes the following steps.

In a process of executing a business transaction request, an oracle contract is called to generate a random number acquisition request.

The random number acquisition request is processed through the oracle contract, and at least two oracle nodes arranged outside the blockchain are made to generate random factors based on private keys of the at least two oracle nodes.

The random factors fed back by the at least two oracle nodes are acquired through the oracle contract.

The random factors are aggregated through the oracle contract to form an aggregation factor, and a random number is generated according to the aggregation factor and an on-chain random algorithm.

The random number is fed back to the business transaction request through the oracle contract.

In a second aspect, an embodiment of the present disclosure provides an apparatus for acquiring a random number for a blockchain. The apparatus is disposed in a blockchain node and includes a random number acquisition request generation module, a random number acquisition request execution module, a random factor acquisition module, a random number generation module and a random number feedback module.

The random number acquisition request generation module is configured to, in a process of executing a business transaction request, call an oracle contract to generate a random number acquisition request.

The random number acquisition request execution module is configured to process the random number acquisition request through the oracle contract, and make at least two oracle nodes arranged outside the blockchain generate random factors based on private keys of the at least two oracle nodes.

The random factor acquisition module is configured to acquire the random factors fed back by the at least two oracle nodes through the oracle contract.

The random number generation module is configured to aggregate the random factors through the oracle contract to form an aggregation factor, and generate a random number according to the aggregation factor and an on-chain random algorithm.

The random number feedback module is configured to feed back the random number to the business transaction request through the oracle contract.

In a third aspect, an embodiment of the present disclosure further provides an electronic device. The electronic device includes at least one processor and a memory communicatively connected to the at least one processor.

The memory stores an instruction executable by the at least one processor, and the instruction is executed by the at least one processor to enable the at least one processor to perform the method for acquiring a random number for a blockchain provided by the embodiment in the first aspect.

In a fourth aspect, an embodiment of the present disclosure provides a non-transitory computer-readable storage medium storing computer instructions, where the computer instructions are used for enabling a computer to perform the method for acquiring a random number for a blockchain provided by the embodiment in the first aspect.

In a fifth aspect, an embodiment of the present disclosure further provides a computer program product. The computer program product includes a computer program/instruction, where the computer program/instruction, when executed by a processor, implements the method for acquiring a random number for a blockchain provided by the embodiment in the first aspect.

In the embodiments of the present disclosure, at least two oracle nodes arranged outside the blockchain are made to generate random factors based on the private keys of the at least two oracle nodes, reducing the risk that the random factor is tampered with in the process of generation and transmission and effectively improving the reliability of random factor generation. On the basis of the above, all random factors are aggregated through the oracle contract to form an aggregation factor, and the random number is generated according to an on-chain random algorithm so that even if a few oracle nodes are attacked, the randomness of the random number cannot be affected, ensuing the probability uniform distribution of random numbers on the blockchain and improving the reliability of the generated random numbers.

It is to be understood that the content described in this part is neither intended to identify key or important features of embodiments of the present disclosure nor intended to limit the scope of the present disclosure. Other features of the present disclosure are apparent from the description provided hereinafter.

### BRIEF DESCRIPTION OF DRAWINGS

The drawings are intended to provide a better understanding of the solution and not to limit the present disclosure. In the drawings:
FIG. 1A is a schematic diagram of a system architecture suitable for embodiments of the present disclosure for a blockchain system to acquire a random number;
FIG. 1B is a flowchart of a method for acquiring a random number for a blockchain according to an embodiment of the present disclosure;
FIG. 2 is a structural diagram of an apparatus for acquiring a random number for a blockchain according to an embodiment of the present disclosure; and
FIG. 3 is a block diagram of an electronic device for performing a method for acquiring a random number for a blockchain of an embodiment of the present disclosure.

### DETAILED DESCRIPTION

Example embodiments of the present disclosure, including details of embodiments of the present disclosure, are described herein in conjunction with drawings to facilitate understanding. The example embodiments are illustrative only.

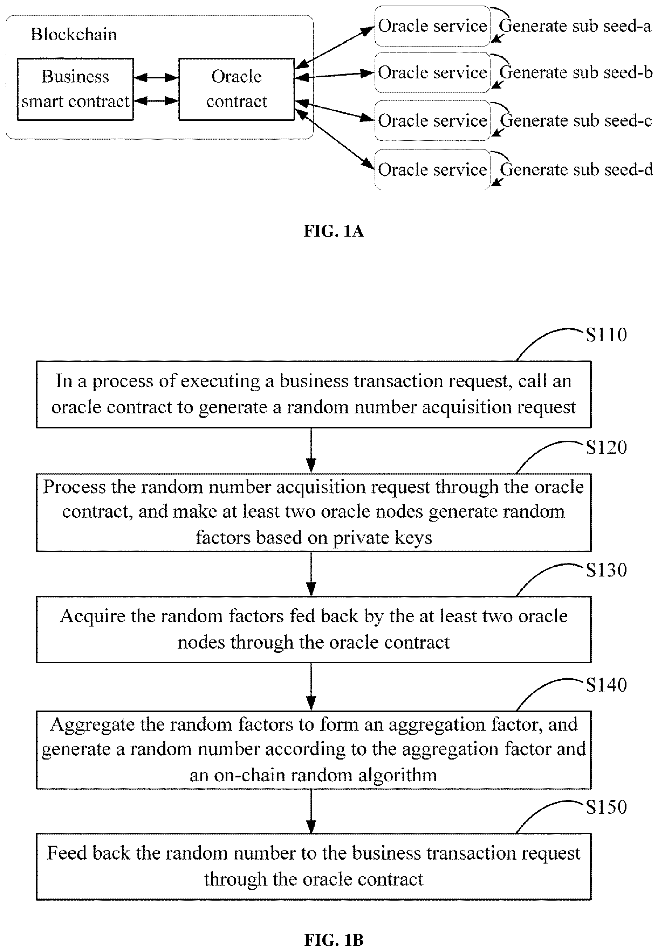

In order to embodiments of the present disclosure, FIG. 1A is used as an example, which shows a schematic diagram of a system architecture suitable for embodiments of the present disclosure for a blockchain system to acquire a random number, but is not to be construed as specific limitations on the embodiments of the present disclosure.

With reference to FIG. 1A, a business smart contract and an oracle contract are deployed in a blockchain system, and the business smart contract and the oracle contract are interrelated. In addition, a plurality of oracle services (which may also be oracle nodes) are arranged outside the blockchain, and each oracle service can generate random factors a (sub seed-a), b (sub seed-b), c (sub seed-c) and d (sub seed-d) respectively. Moreover, each oracle service interacts with the oracle contract.

FIG. 1B is a flowchart of a method for acquiring a random number for a blockchain according to an embodiment of the present disclosure. This embodiment of the present disclosure is applicable to the case where a blockchain accesses at least two oracle nodes arranged outside the blockchain to acquire a plurality of random factors to generate a random number. The method may be performed by an apparatus for acquiring a random number for a blockchain. The apparatus may be implemented in hardware and/or software and may be configured in an electronic device, and the electronic device may be a blockchain node. With reference to FIG. 1B, the method is applied by a blockchain node and specifically includes steps S 110, S 120, S130, S140 and S 150.

In S110, in a process of executing a business transaction request, an oracle contract is called to generate a random number acquisition request.

Various smart contracts may be deployed in a blockchain system to implement corresponding business functions. These smart contracts can be called business smart contracts. The business functions, for example, may be purchasing of electronic goods, games and other functions directly provided for a user, and may also be functions that need to be provided for other business smart contracts in the blockchain system, such as transfer data processing, authority verification and the like. The user may acquire the interface provided by the business smart contract through the client of the blockchain. The business transaction request may be a transaction request initiated by the user to the business smart contract through the client according to the needs of the user himself.

The oracle contract may be used for writing information outside the blockchain into the blockchain. For example, the oracle contract may be a smart contract for acquiring a random number, which is called when there is a need to acquire a random number in the process of executing the business transaction request.

The random number acquisition request may be used for requesting to generate the random number that needs to be acquired in the process of executing the business transaction request. The random number may be used in games to improve the credibility of games or provide rewards for players randomly in game activities, and may also be used in the random allocation of resources. The random allocation of resources may be the random allocation of examiners to candidates.

Specifically, the user may initiate a business transaction request according to the needs of the user himself, and when a random number needs to be acquired in the execution stage of the business transaction request, an oracle contract deployed in the blockchain is called to request to generate the corresponding random number.

For example, the step that in the process of executing the business transaction request, the oracle contract is called to generate the random number acquisition request may include the following step.

In a process of executing the business transaction request by running a business smart contract, the oracle contract is called according to an instruction of calling the oracle contract to generate the random number acquisition request.

The business smart contract may be a smart contract specially used for executing the business transaction request. The business smart contract may be a smart contract specially used for executing the business transaction request.

Specifically, the business transaction request initiated by a user node may be executed by running a business smart contract. When there is a need to acquire a random number in the process of executing the business transaction request, the current business smart contract may initiate an instruction of calling an oracle contract, and through the way of cross-contract calling, the oracle contract is called to generate a random number acquisition request.

It is to be understood that in the process of executing the business transaction request by running the business smart contract, the cross-contract calling of the corresponding oracle contract may be realized according to the instruction of the oracle contract so that the random number acquisition request may be generated without independently initiating the business transaction request for calling the oracle contract, further improving the efficiency of the random number acquisition.

In S 120, the random number acquisition request is processed through the oracle contract, and at least two oracle nodes arranged outside the blockchain are made to generate random factors based on private keys of the at least two oracle nodes.

The oracle node may be a node outside the blockchain and is responsible for generating a random factor and endorsing the generated random factor. The oracle node may generate a pair of public and private keys locally. Accordingly, the oracle node may generate random data based on any random algorithm and then sign the random data using the private key to generate the random factor. Furthermore, the oracle node may generate random data based on a request parameter of the random number acquisition request and then sign the random data using the private key to generate the random factor.

The request parameter is a parameter capable of characterizing the random number acquisition request and for example, may include at least one of a request number, request data, a request hash value, a requester address and a callback function.

Specifically, the random number acquisition request may be executed through an oracle contract, and at least two oracle nodes arranged outside the blockchain are controlled. Based on the above, the random data determined according to the request parameter of the random number acquisition request may be signed using the private key of each oracle node, and the signature result is taken as the corresponding random factor. For example, the random number acquisition request may be sent by calling the interface of each oracle node. Alternatively, other manners may be used to enable each oracle node to find the random number acquisition request and then execute the random number acquisition request.

For example, the step that the random number acquisition request is processed through the oracle contract, and at least two oracle nodes arranged outside the blockchain are made to generate the random factors based on the private keys of the at least two oracle nodes includes the following step.

The random number acquisition request is processed through the oracle contract, an event log is generated, and the event log is recorded in a block, where the event log is recorder in the block header of the block.

The event log is used for triggering the at least two oracle nodes to acquire the random number acquisition request when the event log is monitored by the at least two oracle nodes and generate the random factors based on the private keys of the at least two oracle nodes.

The event log may be event information generated in the process where the oracle contract executes the random number acquisition request. The event log may be recorded in the block header or block body of the blockchain. The block includes a block header and a block body. Detailed data of the block may be recorded in the block body. For example, at least one transaction request data generated or received in the process of executing the blockchain may be recorded in the block body. The hash value of the previous block, the hash value of the current block and at least one tree for recording information may be recorded in the block header. For example, the event log may be recorded in the log tree in the block header. The log tree may be a data structure for recording the event information in the block.

Specifically, when the oracle contract executes the random number acquisition request, the event log corresponding to the random number acquisition request may be generated and then the event log is recorded in the log tree in the block header. The contents formed in the event log may be pre-defined, that is, information included in the random number event generated when the oracle contract executes the random number acquisition request is set. After the event log is generated, the blockchain node may broadcast the event log in the network. The network port (ip: port) of the blockchain and the address of the oracle contract may be registered in the oracle node in advance. Accordingly, the oracle node may monitor the event generated in the blockchain, and if the oracle node monitors the random number acquisition event log, the oracle node may be triggered to acquire the random number acquisition request, so as to generate the random factor based on the private key of the oracle node itself.

It is to be understood that the oracle node monitors the event log generated in the blockchain so that the oracle node may accurately acquire the random number acquisition request in the corresponding blockchain node, so as to timely determine the random number acquisition request on the blockchain and generate a corresponding random factor based on the private key of the oracle node itself, thereby effectively improving the reliability of random factor generation. Through the monitoring, the oracle contract of the blockchain does not need to call the interface of a specific oracle node. The blockchain network includes a plurality of blockchain nodes, and if these blockchain nodes separately call oracle nodes, a large number of call requests may be produced.

For example, the step that the random number acquisition request is processed through the oracle contract may include the following step.

The random number acquisition request is executed through the oracle contract to determine a request number, request data, a request hash value, a requester address and a callback function.

The request number may be the identification information included in the random number acquisition request, and the identification information may be used for distinguishing different random number acquisition requests. The request data may be used for describing the requirements for the generated random number. The request hash value may be obtained by hashing the random number acquisition request by the oracle contract, and the request hash value may be used for each node of the blockchain to reach a consensus on the random number acquisition event.

The requester address may be the address of the business smart contract calling the oracle contract. The callback function may feed back the generated random number to the address where the business smart contract is located.

Specifically, the random number acquisition request may be executed through the oracle contract, and the request number, the request data, the request hash value, the requester address and the callback function may be determined according to the execution result.

In S 130, the random factors fed back by the at least two oracle nodes are acquired through the oracle contract.

Specifically, the oracle node may initiate a transaction to the blockchain after the oracle generates the random factor locally, so as to feed back the generated random factor to the oracle contract.

For example, the step that the random factors fed back by the at least two oracle nodes are acquired through the oracle contract may include the following steps.

Random factor feedback transaction requests initiated by the at least two oracle nodes are acquired.

In a process of executing the random factor feedback transaction requests, the oracle contract is called to acquire the random factors fed back by the at least two oracle nodes.

The random factor feedback transaction request may be a transaction request that feeds back a random factor to the blockchain node calling the oracle contract.

Specifically, the oracle node may be a client installed with a blockchain and may send a random factor feedback transaction request to the corresponding blockchain node after the random factor is generated, and the blockchain node may call the oracle contract to acquire the random factor fed back by the oracle node.

It is to be understood that the feedback transaction request initiated by the oracle node is executed, and the oracle contract is called to acquire the random factors generated in the oracle node, thereby ensuring the reliability of the random factor acquired by the oracle contract and improving the reliability of random number generation.

For example, after the random factors fed back by the at least two oracle nodes are acquired through the oracle contract, the method further include the following step.

A signature of the random factor of each of the at least two oracle nodes is verified using the public key of each of the at least two oracle nodes through the oracle contract, where the signature is obtained by signing a request parameter of the random number acquisition request and the random factor by each of the at least two oracle nodes using the private key.

Specifically, validity verification may be performed on a random number acquisition request parameter and the signature of the random factor using the public key of the oracle node stored in the blockchain through the oracle contract, and whether the signature is generated by the oracle node and whether the random number acquisition request parameter of the signature is consistent with the request parameter stored in the blockchain are verified.

It is to be understood that each oracle node signs the random number acquisition request parameter and the random factor based on the private key of each oracle node and further verifies the validity of the acquired random factor using the private key of each oracle node stored in the chain through the oracle contract, thereby ensuring the reliability of the random factor acquired by the oracle contract and improving the reliability of random number generation.

In S 140, the random factors are aggregated through the oracle contract to form an aggregation factor, and a random number is generated according to the aggregation factor and an on-chain random algorithm.

The aggregation factor may be the result of the calculation of each random factor using a preset aggregation algorithm. The preset aggregation algorithm may be established based on an Agg function, and the Agg function may provide column-based aggregation operation. For example, if the random factors are S 1, S2, ..., and Sn, respectively, the aggregation factor S formed after the aggregation operation is Agg(S1, S2, ..., Sn). It is to be noted that the type of the aggregation algorithm is limited herein.

The on-chain random algorithm may be an algorithm rule for generating random numbers. There may be one or more on-chain random number algorithms, and the currently used algorithm is specified by the business smart contract or selected by the oracle contract.

Specifically, an aggregation algorithm may be pre-set, the random factors acquired by the oracle contract may be aggregated through the aggregation algorithm, and the aggregation result may be taken as the aggregation factor. Further, the oracle contract may generate the random number according to the aggregation factor using the random number algorithm set on the chain.

In S 150, the random number is fed back to the business transaction request through the oracle contract.

Specifically, the oracle contract may feed back the random number generated by the oracle contract itself to the corresponding business transaction request.

For example, the step that the random number is fed back to the business transaction request through the oracle contract may include the following step.

The random number is fed back to the business transaction request based on the callback function through the oracle contract.

Specifically, the oracle contract may feed back the random number generated by the oracle contract itself to the corresponding business transaction request by calling the callback function included in the request parameter of the blockchain random number acquisition request.

It is to be understood that the oracle contract may feed back the random number generated by the oracle contract itself to the corresponding business transaction request based on the callback function included in the request parameter of the random number acquisition request, thereby ensuring the reliability of the random number acquired by the business transaction request.

On the basis of the solutions of the preceding embodiments, further, before at least two oracle nodes arranged outside the blockchain are made to generate the random factors based on the private keys of the at least two oracle nodes, the method may further include the following step.

Registration transaction requests of the at least two oracle nodes are acquired.

In a process of executing the registration transaction requests, the oracle contract is called, identities of the at least two oracle nodes, a code storage certificate of a random factor generation algorithm and public keys of the at least two oracle nodes are acquired in the registration transaction requests, and on-chain storage is performed on the identities of the at least two oracle nodes, the code storage certificate of the random factor generation algorithm and the public keys of the at least two oracle nodes.

The registration transaction request may be a transaction request initiated by the oracle node to register node information in the blockchain. The identity of the oracle node may be used for verifying the identity of the oracle node. The code storage certificate of the random factor generation algorithm may be used for verifying the generation process of the random factor fed back by the oracle node. The public key of the oracle node may be used for verifying the signature of the random factor fed back by the oracle node.

Specifically, the registration transaction request of the oracle node is acquired, the oracle contract is called in the process of executing the registration transaction request, and the identity of the oracle node in the acquired registration transaction request, the code storage certificate of the random factor generation algorithm and the public key of the oracle node are stored in the blockchain. The public key of each oracle node may be registered in the oracle contract, and the public key corresponds to an oracle node outside the blockchain, thereby achieving the binding between the blockchain and each oracle node.

It is to be noted that in the process of executing the registration transaction requests, the oracle contract is called, and identities of the at least two oracle nodes in the registration transaction requests, the code storage certificate of the random factor generation algorithm and the public keys of the at least two oracle nodes may be acquired and stored in the blockchain, thereby achieving the verification of the oracle node and the generated random factor by the current oracle contract and ensuring the reliability of the acquired random factor.

In this embodiment of the present disclosure, at least two oracle nodes arranged outside the blockchain are made to generate random factors based on the private keys of the at least two oracle nodes, reducing the risk that the random factor is tampered in the process of generation and transmission and effectively improving the reliability of random factor generation. On the basis of the above, all random factors are aggregated through the oracle contract to form an aggregation factor, and the random number is generated according to an on-chain random algorithm so that even if a few oracle nodes are attacked, the randomness of the random number cannot be affected, ensuing the probability uniform distribution of random numbers on the blockchain and improving the reliability of the generated random numbers.

In the solutions of the present disclosure, the collection, storage, use, processing, transmission, provision, and disclosure of user personal information involved are in compliance with provisions of relevant laws and regulations and do not violate public order and good customs.

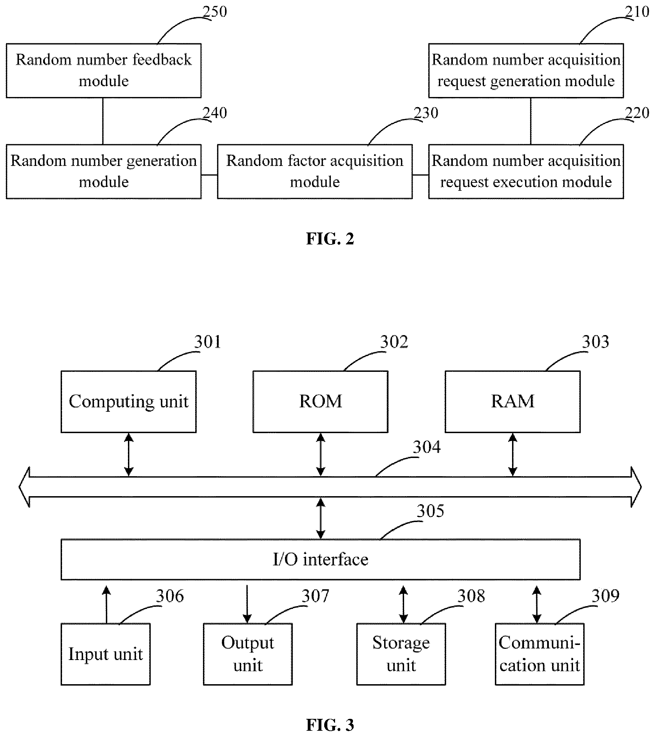

FIG. 2 is a structural diagram of an apparatus for acquiring a random number for a blockchain according to an embodiment of the present disclosure. This embodiment of the present disclosure is applicable to the case where a blockchain accesses at least two oracle nodes arranged outside the blockchain to acquire a plurality of random factors to generate a random number. The apparatus may be implemented in hardware and/or software and may be configured in an electronic device, and the electronic device may be a blockchain node. With reference to FIG. 2, the apparatus is disposed in a blockchain node and specifically includes a random number acquisition request generation module 210, a random number acquisition request execution module 220, a random factor acquisition module 230, a random number generation module 240 and a random number feedback module 250.

The random number acquisition request generation module 210 is configured to, in a process of executing a business transaction request, call an oracle contract to generate a random number acquisition request.

The random number acquisition request execution module 220 is configured to process the random number acquisition request through the oracle contract, and make at least two oracle nodes arranged outside the blockchain generate random factors based on private keys of the at least two oracle nodes.

The random factor acquisition module 230 is configured to acquire the random factors fed back by the at least two oracle nodes through the oracle contract.

The random number generation module 240 is configured to aggregate the random factors through the oracle contract to form an aggregation factor, and generate a random number according to the aggregation factor and an on-chain random algorithm.

The random number feedback module 250 is configured to feed back the random number to the business transaction request through the oracle contract.

Optionally, the random number acquisition request execution module 220 is specifically configured to process random number acquisition request through the oracle contract, generate an event log, and record the event log in a block, where the event log is recorder in the block header of the block.

The event log is used for triggering the at least two oracle nodes to acquire the random number acquisition request when the event log is monitored by the at least two oracle nodes and generate the random factors based on the private keys of the at least two oracle nodes.

Optionally, the operation that the random number acquisition request is processed through the oracle contract may include the following operation.

The random number acquisition request is executed through the oracle contract to determine a request number, request data, a request hash value, a requester address and a callback function.

Accordingly, the random number feedback module 250 is specifically configured to feed back the random number to the business transaction request based on the callback function through the oracle contract.

Optionally, the random number acquisition request generation module 210 is specifically configured to, in a process of executing the business transaction request by running a business smart contract, call the oracle contract according to an instruction of calling the oracle contract to generate the random number acquisition request.

Optionally, the random factor acquisition module 230 is specifically configured to acquire random factor feedback transaction requests initiated by the at least two oracle nodes, and in a process of executing the random factor feedback transaction requests, call the oracle contract to acquire the random factors fed back by the at least two oracle nodes.

Optionally, the apparatus further includes: a random factor signature verification module, which is configured to verify a signature of the random factor of each of the at least two oracle nodes using a public key of each of the at least two oracle nodes through the oracle contract, where the signature is obtained by signing a request parameter of the random number acquisition request and the random factor by each of the at least two oracle nodes using the private key.

Optionally, the apparatus further includes: an oracle node registration module, which is configured to acquire registration transaction requests of the at least two oracle nodes, and in a process of executing the registration transaction requests, call the oracle contract, acquire, in the registration transaction requests, identities of the at least two oracle nodes, a code storage certificate of a random factor generation algorithm and public keys of the at least two oracle nodes, and perform on-chain storage on the identities of the at least two oracle nodes in the registration transaction requests, the code storage certificate of the random factor generation algorithm and the public keys of the at least two oracle nodes.

The apparatus for acquiring a random number for a blockchain provided by this embodiment of the present disclosure may perform any method for acquiring a random number for a blockchain provided by the embodiments of the present disclosure and has functional modules and beneficial effects corresponding to the performed method. For content not described in detail in this embodiment, reference may be made to description in any method embodiment of the present disclosure.

According to an embodiment of the present disclosure, the present disclosure further provides an electronic device, a readable storage medium and a computer program product.

FIG. 3 is an example block diagram of an example electronic device 300 that may be used for perform the embodiments of the present disclosure. The electronic device is intended to represent various forms of digital computers, for example, a laptop computer, a desktop computer, a workbench, a personal digital assistant, a server, a blade server, a mainframe computer, or another applicable computer. The electronic device may also represent various forms of mobile apparatuses, for example, a personal digital assistant, a cellphone, a smartphone, a wearable device, or a similar computing apparatus. Herein the shown components, the connections and relationships between these components, and the functions of these components are illustrative only and are not intended to limit the implementation of the present disclosure as described and/or claimed herein.

As shown in FIG. 3, the device 300 includes a computing unit 301. The computing unit 301 may perform various types of appropriate operations and processing based on a computer program stored in a read-only memory (ROM) 302 or a computer program loaded from a storage unit 308 to a random-access memory (RAM) 303. Various programs and data required for the operation of the device 300 may also be stored in the RAM 303. The computing unit 301, the ROM 302 and the RAM 303 are connected to each other via a bus 304. An input/output (I/O) interface 305 is also connected to the bus 304.

Multiple components in the device 300 are connected to the I/O interface 305. The multiple components include an input unit 306 such as a keyboard or a mouse, an output unit 307 such as various types of displays or speakers, the storage unit 308 such as a magnetic disk or an optical disc, and a communication unit 309 such as a network card, a modem or a wireless communication transceiver. The communication unit 309 allows the device 300 to exchange information/data with other devices over a computer network such as the Internet and/or various telecommunications networks.

The computing unit 301 may be various general-purpose and/or special-purpose processing components having processing and computing capabilities. Some examples of the computing unit 301 include, but are not limited to, central processing units (CPUs), graphics processing units (GPUs), various special-purpose artificial intelligence (AI) computing chips, various computing units running machine learning models and algorithms, digital signal processors (DSPs), and any suitable processors, controllers and microcontrollers. The computing unit 301 executes various preceding methods and processing, such as the method for acquiring a random number for a blockchain. For example, in some embodiments, the method for acquiring a random number for a blockchain may be implemented as a computer software program tangibly contained in a machine-readable medium such as the storage unit 308. In some embodiments, part or all of computer programs may be loaded and/or installed on the device 300 via the ROM 302 and/or the communication unit 309. When the computer program is loaded to the RAM 303 and executed by the computing unit 301, one or more steps of the preceding method for acquiring a random number for a blockchain may be executed. Alternatively, in other embodiments, the computing unit 301 may be configured, in any other suitable manner (for example, by means of firmware), to execute the method for acquiring a random number for a blockchain.

Herein various embodiments of the preceding systems and techniques may be implemented in digital electronic circuitry, integrated circuitry, field-programmable gate arrays (FPGAs), application-specific integrated circuits (ASICs), application-specific standard products (ASSPs), systems on chips (SoCs), complex programmable logic devices (CPLDs), computer hardware, firmware, software, and/or combinations thereof. The embodiments may include implementations in one or more computer programs. The one or more computer programs are executable and/or interpretable on a programmable system including at least one programmable processor. The programmable processor may be a special-purpose or general-purpose programmable processor for receiving data and instructions from a memory system, at least one input apparatus and at least one output apparatus and transmitting the data and instructions to the memory system, the at least one input apparatus and the at least one output apparatus.

Program codes for implementation of the methods of the present disclosure may be written in one programming language or any combination of multiple programming languages. The program codes may be provided for the processor or controller of a general-purpose computer, a special-purpose computer or another programmable data processing apparatus to enable functions/operations specified in flowcharts and/or block diagrams to be implemented when the program codes are executed by the processor or controller. The program codes may be executed entirely on a machine or may be executed partly on a machine. As a stand-alone software package, the program codes may be executed partly on a machine and partly on a remote machine or may be executed entirely on a remote machine or a server.

In the context of the present disclosure, the machine-readable medium may be a tangible medium that may include or store a program that is used by or used in conjunction with an instruction execution system, apparatus or device. The machine-readable medium may be a machine-readable signal medium or a machine-readable storage medium. The machine-readable medium may include, but is not limited to, an electronic, magnetic, optical, electromagnetic, infrared or semiconductor system, apparatus or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM), a flash memory, an optical fiber, a portable compact disk read-only memory (CD-ROM), an optical memory device, a magnetic memory device or any suitable combination thereof.

In order to provide the interaction with a user, the systems and techniques described herein may be implemented on a computer. The computer has a display device (for example, a cathode-ray tube (CRT) or a liquid-crystal display (LCD) monitor) for displaying information to the user and a keyboard and a pointing device (for example, a mouse or a trackball) through which the user can provide input to the computer. Other types of apparatuses may also be used for providing interaction with a user. For example, feedback provided for the user may be sensory feedback in any form (for example, visual feedback, auditory feedback, or haptic feedback). Moreover, input from the user may be received in any form (including acoustic input, voice input, or haptic input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware or front-end components. Components of a system may be interconnected by any form or medium of digital data communication (for example, a communication network). Examples of the communication network include a local area network (LAN), a wide area network (WAN), a blockchain network and the Internet.

A computing system may include a client and a server. The client and the server are usually far away from each other and generally interact through the communication network. The relationship between the client and the server arises by virtue of computer programs running on respective computers and having a client-server relationship to each other. The server may be a cloud server, also referred to as a cloud computing server or a cloud host. As a host product in a cloud computing service system, the server solves the defects of difficult management and weak service scalability in a related physical host and a related VPS service. The server may also be a server of a distributed system or a server combined with a blockchain.

Artificial intelligence is the study of making computers simulate certain human thinking processes and intelligent behaviors (such as learning, reasoning, thinking and planning), including technologies at both the hardware and software levels. Artificial intelligence hardware technologies generally include technologies such as sensors, special-purpose artificial intelligence chips, cloud computing, distributed storage and big data processing. Artificial intelligence software technologies mainly include several major technologies such as computer vision technology, speech recognition technology, natural language processing technology, machine learning/deep learning technology, big data processing technology and knowledge graph technology.

Cloud computing refers to a technical system that accesses a flexible and scalable shared physical or virtual resource pool through a network, where resources may include servers, operating systems, networks, software, applications and storage devices, and may deploy and manage resources in an on-demand and self-service manner. Cloud computing can provide efficient and powerful data processing capabilities for artificial intelligence, the blockchain and other technical applications and model training.

It is to be understood that various forms of the preceding flows may be used with steps reordered, added, or removed. For example, the steps described in the present disclosure may be executed in parallel, in sequence, or in a different order as long as the desired result of the solutions provided in the present disclosure is achieved. The execution sequence of these steps is not limited herein.

## Claims

1. A method for acquiring a random number for a blockchain, applied by a blockchain node and comprising:
in a process of executing a business transaction request, calling (5110) an oracle contract to generate a random number acquisition request;
processing (S 120) the random number acquisition request through the oracle contract, and making at least two oracle nodes arranged outside the blockchain generate random factors based on private keys of the at least two oracle nodes;
acquiring (S 130) the random factors fed back by the at least two oracle nodes through the oracle contract;
verifying a signature of the random factor of each of the at least two oracle nodes using a public key of each of the at least two oracle nodes through the oracle contract, wherein the signature is obtained by signing a request parameter of the random number acquisition request and the random factor by each of the at least two oracle nodes using the private key, and the request parameter is a parameter capable of characterizing the random number acquisition request;
aggregating (S 140) the random factors through the oracle contract to form an aggregation factor, and generating a random number according to the aggregation factor and an on-chain random algorithm; and
feeding back (S 150) the random number to the business transaction request through the oracle contract.

2. The method according to claim 1, wherein processing the random number acquisition request through the oracle contract and making the at least two oracle nodes arranged outside the blockchain generate the random factors based on the private keys of the at least two oracle nodes comprise:
processing the random number acquisition request through the oracle contract, generating an event log, and recording the event log in a block;
wherein the event log is used for triggering the at least two oracle nodes to acquire the random number acquisition request when the event log is monitored by the at least two oracle nodes and generate the random factors based on the private keys of the at least two oracle nodes.

3. The method according to claim 1, wherein processing the random number acquisition request through the oracle contract comprises:
executing the random number acquisition request through the oracle contract to determine a request number, request data, a request hash value, a requester address and a callback function;
accordingly, feeding back the random number to the business transaction request through the oracle contract comprises:
feeding back the random number to the business transaction request based on the callback function through the oracle contract.

4. The method according to claim 1, wherein, in the process of executing the business transaction request, calling the oracle contract to generate the random number acquisition request comprises:
in a process of executing the business transaction request by running a business smart contract, calling the oracle contract according to an instruction of calling the oracle contract to generate the random number acquisition request.

5. The method according to claim 1, wherein acquiring the random factors fed back by the at least two oracle nodes through the oracle contract comprises:
acquiring random factor feedback transaction requests initiated by the at least two oracle nodes; and
in a process of executing the random factor feedback transaction requests, calling the oracle contract to acquire the random factors fed back by the at least two oracle nodes.

6. The method according to claim 1, before making the at least two oracle nodes arranged outside the blockchain generate the random factors based on the private keys of the at least two oracle nodes, further comprising:
acquiring registration transaction requests of the at least two oracle nodes; and
in a process of executing the registration transaction requests, calling the oracle contract, acquiring, in the registration transaction requests, identities of the at least two oracle nodes, a code storage certificate of a random factor generation algorithm, and public keys of the at least two oracle nodes, and performing on-chain storage on the identities of the at least two oracle nodes, the code storage certificate of the random factor generation algorithm, and the public keys of the at least two oracle nodes.

7. An apparatus for acquiring a random number for a blockchain, comprising:
a random number acquisition request generation module (210), which is configured to, in a process of executing a business transaction request, call an oracle contract to generate a random number acquisition request;
a random number acquisition request execution module (220), which is configured to process the random number acquisition request through the oracle contract, and make at least two oracle nodes arranged outside the blockchain generate random factors based on private keys of the at least two oracle nodes;
a random factor acquisition module (230), which is configured to acquire the random factors fed back by the at least two oracle nodes through the oracle contract;
a random factor signature verification module, which is configured to verify a signature of the random factor of each of the at least two oracle nodes using a public key of each of the at least two oracle nodes through the oracle contract, wherein the signature is obtained by signing a request parameter of the random number acquisition request and the random factor by each of the at least two oracle nodes using the private key, and the request parameter is a parameter capable of characterizing the random number acquisition request;
a random number generation module (240), which is configured to aggregate the random factors through the oracle contract to form an aggregation factor, and generate a random number according to the aggregation factor and an on-chain random algorithm; and
a random number feedback module (250), which is configured to feed back the random number to the business transaction request through the oracle contract.

8. The apparatus according to claim 7, wherein the random number acquisition request execution module (220) is further configured to:
process the random number acquisition request through the oracle contract, generate an event log, and record the event log in a block;
wherein the event log is used for triggering the at least two oracle nodes to acquire the random number acquisition request when the event log is monitored by the at least two oracle nodes and generate the random factors based on the private keys of the at least two oracle nodes.

9. The apparatus according to claim 7, wherein the random number acquisition request execution module (220) processes the random number acquisition request through the oracle contract by executing the random number acquisition request through the oracle contract to determine a request number, request data, a request hash value, a requester address and a callback function;
accordingly, the random number feedback module (250) is further configured to feed back the random number to the business transaction request based on the callback function through the oracle contract.

10. The apparatus according to claim 7, wherein, the random number acquisition request generation module (210) is further configured to:
in a process of executing the business transaction request by running a business smart contract, call the oracle contract according to an instruction of calling the oracle contract to generate the random number acquisition request.

11. The apparatus according to claim 7, wherein the random factor acquisition module (230) is further configured to:
acquire random factor feedback transaction requests initiated by the at least two oracle nodes; and
in a process of executing the random factor feedback transaction requests, call the oracle contract to acquire the random factors fed back by the at least two oracle nodes.

12. The apparatus according to claim 7, further comprising an oracle node registration module, which is configured to:
acquire registration transaction requests of the at least two oracle nodes; and
in a process of executing the registration transaction requests, call the oracle contract, acquire, in the registration transaction requests, identities of the at least two oracle nodes, a code storage certificate of a random factor generation algorithm, and public keys of the at least two oracle nodes, and perform on-chain storage on the identities of the at least two oracle nodes, the code storage certificate of the random factor generation algorithm, and the public keys of the at least two oracle nodes.

13. An electronic device, comprising:
at least one processor and
a memory communicatively connected to the at least one processor;
wherein the memory stores an instruction executable by the at least one processor, and the instruction is executed by the at least one processor to enable the at least one processor to perform the method for acquiring a random number for a blockchain according to any one of claims 1 to 6.

14. A computer-readable storage medium storing computer instructions, wherein the computer instructions are used for enabling a computer to perform the method for acquiring a random number for a blockchain according to any one of claims 1 to 6.

## Patentansprüche

1. Verfahren zum Erfassen einer Zufallszahl für eine Blockchain, das von einem Blockchain-Knoten angewendet wird und aufweist:
Aufrufen (S110) eines Orakelvertrags zur Erzeugung einer Zufallszahlerfassungsanfrage in einem Prozess des Ausführens einer Geschäftsabwicklungsanfrage;
Verarbeiten (S120) der Zufallszahlerfassungsanfrage durch den Orakelvertrag und Bilden von mindestens zwei Orakelknoten, die außerhalb der Blockchainerzeugungszufallsfaktoren vorgesehen sind, basierend auf privaten Schlüsseln der mindestens zwei Orakelknoten;
Erfassen (S130) der Zufallsfaktoren, die von den mindestens zwei Orakelknoten durch den Orakelvertrag zurückgegeben werden;
Verifizieren einer Signatur des Zufallsfaktors von jedem der mindestens zwei Orakelknoten unter Verwendung eines öffentlichen Schlüssels von jedem der mindestens zwei Orakelknoten durch den Orakelvertrag, wobei die Signatur erlangt wird durch Signieren eines Anfrageparameters der Zufallszahlerfassungsanfrage und des Zufallsfaktors durch jeden von den mindestens zwei Orakelknoten unter Verwendung des privaten Schlüssels, und der Anfrageparameter ein Parameter ist, der in der Lage ist zur Charakterisierung der Zufallszahlerfassungsanfrage;
Aggregieren (S140) der Zufallsfaktoren durch den Orakelvertrag, um einen Aggregationsfaktor zu bilden, und Erzeugen einer Zufallszahl gemäß dem Aggregationsfaktor und einem On-Chain Zufallsalgorithmus; und
Zurückgeben (S150) der Zufallszahl an die Geschäftsabwicklungsanfrage durch den Orakelvertrag.

2. Verfahren nach Anspruch 1, bei dem das Verarbeiten der Zufallszahlerfassungsanfrage durch den Orakelvertrag und das Bilden der mindestens zwei Orakelknoten, die außerhalb der Blockchainerzeugungszufallsfaktoren angeordnet sind, basierend auf den privaten Schlüsseln der mindestens zwei Orakelknoten, aufweist:
Verarbeiten der Zufallszahlerfassungsanfrage durch den Orakelvertrag, Erzeugen eines Ereignislogs, und Aufzeichnen des Ereignislogs in einem Block;
wobei das Ereignislog verwendet wird zum Triggern der mindestens zwei Orakelknoten, um die Zufallszahlerfassungsanfrage zu erfassen, wenn das Ereignislog durch die mindestens zwei Orakelknoten überwacht wird, und die Zufallsfaktoren basierend auf den privaten Schlüsseln der mindestens zwei Orakelknoten zu erzeugen.

3. Verfahren nach Anspruch 1, bei dem das Verarbeiten der Zufallszahlerfassungsanfrage durch den Orakelvertrag aufweist:
Ausführen der Zufallszahlerfassungsanfrage durch den Orakelvertrag, um eine Anfragenummer, Anfragedaten, einen Anfrage-Hashwert, eine Adresse des Anfragenden und eine Callback-Funktion zu bestimmen;
das Zurückgeben der Zufallszahl an die Geschäftsabwicklungsanfrage durch den Orakelvertrag entsprechend aufweist:
Zurückgeben der Zufallszahl an die Geschäftsabwicklungsanfrage basierend auf der Callback-Funktion durch den Orakelvertrag.

4. Verfahren nach Anspruch 1, bei dem in dem Prozess des Ausführens der Geschäftsabwicklungsanfrage, das Aufrufen des Orakelvertrags zur Erzeugung der Zufallszahlerfassungsanfrage aufweist:
Aufrufen des Orakelvertrags gemäß einem Befehl zum Aufrufen des Orakelvertrags, um die Zufallszahlerfassungsanfrage zu erzeugen, in einem Prozess des Ausführens der Geschäftsabwicklungsanfrage durch Ausführen eines Business-Smart-Contract.

5. Verfahren nach Anspruch 1, bei dem das Erfassen der Zufallsfaktoren, die von den mindestens zwei Orakelknoten durch den Orakelvertrag zurückgegeben werden, aufweist:
Erfassen von Zufallsfaktorfeedbacktransaktionsanfragen, die von den mindestens zwei Orakelknoten initiiert werden; und
Aufrufen des Orakelvertrags zum Erfassen der Zufallsfaktoren, die von den mindestens zwei Orakelknoten zurückgegeben werden, in einem Prozess des Ausführens der Zufallsfaktorfeedbacktransaktionsanfragen.

6. Verfahren nach Anspruch 1, das bevor die mindestens zwei Orakelknoten, die außerhalb der Blockchainerzeugungszufallsfaktoren angeordnet sind, basierend auf den privaten Schlüsseln der mindestens zwei Orakelknoten gebildet werden, ferner aufweist:
Erfassen von Registrierungstransaktionsanfragen der mindestens zwei Orakelknoten; und
in einem Prozess des Ausführens der Registrierungstransaktionsanfragen, Aufrufen des Orakelvertrags, in den Registrierungstransaktionsanfragen, Erfassen von Identitäten der mindestens zwei Orakelknoten, eines Code-Speicher-Zertifikats eines Zufallsfaktorerzeugungsalgorithmus und von öffentlichen Schlüsseln der mindestens zwei Orakelknoten, und Durchführen einer On-Chain-Speicherung für die Identitäten der mindestens zwei Orakelknoten, das Code-Speicher-Zertifikat des Zufallsfaktorerzeugungsalgorithmus, und die öffentlichen Schlüssel der mindestens zwei Orakelknoten.

7. Vorrichtung zum Erfassen einer Zufallszahl für eine Blockchain, mit:
einem Zufallszahlerfassungsanfrageerzeugungsmodul (210), das konfiguriert ist zum Aufrufen eines Orakelvertrags in einem Prozess des Ausführens einer Geschäftsabwicklungsanfrage, um eine Zufallszahlerfassungsanfrage zu erzeugen;
einem Zufallszahlerfassungsanfrageausführungsmodul (220), das konfiguriert ist zum Verarbeiten der Zufallszahlerfassungsanfrage durch den Orakelvertrag, und zum Bilden von mindestens zwei Orakelknoten, die außerhalb der Blockchainerzeugungszufallsfaktoren angeordnet sind, basierend auf privaten Schlüsseln der mindestens zwei Orakelknoten;
einem Zufallsfaktorerfassungsmodul (230), das konfiguriert ist zum Erfassen der Zufallsfaktoren, die von den mindestens zwei Orakelknoten durch den Orakelvertrag zurückgegeben werden;
einem Zufallsfaktorsignaturverifikationsmodul, das konfiguriert ist zum Verifizieren einer Signatur des Zufallsfaktors von jedem der mindestens zwei Orakelknoten unter Verwendung eines öffentlichen Schlüssels von jedem der mindestens zwei Orakelknoten durch den Orakelvertrag, wobei die Signatur erhalten wird durch Signieren eines Anfrageparameters der Zufallszahlerfassungsanfrage und des Zufallsfaktors durch jeden der mindestens zwei Orakelknoten unter Verwendung des privaten Schlüssels, und der Anfrageparameter ein Parameter ist, der die Zufallszahlerfassungsanfrage charakterisieren kann;
einem Zufallszahlerzeugungsmodul (240), das konfiguriert ist zum Aggregieren der Zufallsfaktoren durch den Orakelvertrag, um einen Aggregationsfaktor zu bilden, und zum Erzeugen einer Zufallszahl gemäß dem Aggregationsfaktor und einem On-Chain Zufallsalgorithmus; und
einem Zufallszahlrückgabemodul (250), das konfiguriert ist zum Zurückgeben der Zufallszahl an die Geschäftsabwicklungsanfrage durch den Orakelvertrag.

8. Vorrichtung nach Anspruch 7, bei der das Zufallszahlerfassungsanfrageausführungsmodul (220) ferner konfiguriert ist zum:
Verarbeiten der Zufallszahlerfassungsanfrage durch den Orakelvertrag, Erzeugen eines Ereignislogs, und Aufzeichnen des Eventlogs in einem Block;
wobei das Ereignislog verwendet wird zum Triggern der mindestens zwei Orakelknoten, um die Zufallszahlerfassungsanfrage zu erfassen, wenn das Ereignislog durch die zwei Orakelknoten überwacht wird, und Erzeugen der Zufallsfaktoren basierend auf den privaten Schlüsseln der mindestens zwei Orakelknoten.

9. Vorrichtung nach Anspruch 7, bei der das Zufallszahlerfassungsanfrageausführungsmodul (220) die Zufallszahlerfassungsanfrage durch den Orakelvertrag verarbeitet, indem die Zufallszahlerfassungsanfrage durch den Orakelvertrag ausgeführt wird, zum Bestimmen einer Anfragenummer, von Anfragedaten, eines Anfrage Hashwerts, einer Adresse des Anfragenden, und einer Callback-Funktion;
wobei das Zufallszahlrückgabemodul (250) ferner entsprechend konfiguriert ist zum Zurückgeben der Zufallszahl an die Geschäftsabwicklungsanfrage basierend auf der Callback-Funktion durch den Orakelvertrag.

10. Vorrichtung nach Anspruch 7, bei der das Zufallszahlerfassungsanfrageerzeugungsmodul (210) ferner konfiguriert ist zum:
Aufrufen des Orakelvertrags gemäß einem Befehl für das Aufrufen des Orakelvertrags in einem Prozess des Ausführens der Geschäftsabwicklungsanfrage durch Ausführen eines Business-Smart-Contract, um die Zufallszahlerfassungsanfrage zu erzeugen.

11. Vorrichtung nach Anspruch 7, bei der das Zufallsfaktorerfassungsmodul (230) ferner konfiguriert ist zum:
Erfassen von Zufallsfaktorrückgabetransaktionsanfragen, die von den mindestens zwei Orakelknoten initiiert werden;
in einem Prozess des Ausführens der Zufallsfaktorrückgabetransaktionsanfragen, Aufrufen des Orakelvertrags zum Erfassen der Zufallsfaktoren, die durch die mindestens zwei Orakelknoten zurückgegeben werden.

12. Vorrichtung nach Anspruch 7, ferner mit einem Orakelknotenregistrierungsmodul, das konfiguriert ist zum:
Erfassen von Registrierungstransaktionsanfragen der mindestens zwei Orakelknoten; und
in einem Prozess des Ausführens der Registrierungstransaktionsanfragen, Aufrufen des Orakelvertrags, in den Registrierungstransaktionsanfragen, Erfassen von Identitäten der mindestens zwei Orakelknoten, eines Code-Speicher-Zertifikats eines Zufallsfaktorerzeugungsalgorithmus, und von öffentlichen Schlüsseln der mindestens zwei Orakelknoten, und Durchführen einer On-Chain Speicherung für die Identitäten der mindestens zwei Orakelknoten, das Code-Speicher-Zertifikat des Zufallsfaktorerzeugungsalgorithmus, und die öffentlichen Schlüssel der mindestens zwei Orakelknoten.

13. Elektronische Vorrichtung mit:
mindestens einem Prozessor; und
einem Speicher, der mit dem mindestens einem Prozessor kommunikativ verbunden ist; wobei
der Speicher einen Befehl speichert, der von dem mindestens einem Prozessor ausführbar ist, und der Befehl durch den mindestens einen Prozessor ausgeführt wird, um den mindestens einem Prozessor zu ermöglichen das Verfahren zum Erfassen einer Zufallszahl für eine Blockchain gemäß einem der Ansprüche 1 bis 6 durchzuführen.

14. Computerlesbares Speichermedium, das Computerbefehle speichert, wobei die Computerbefehle verwendet werden, um einem Computer zu erlauben das Verfahren zum Erfassen einer Zufallszahl für eine Blockchain gemäß einem der Ansprüche 1 bis 6 durchzuführen.

## Revendications

1. Procédé d'acquisition d'un nombre aléatoire pour une chaîne de blocs, appliqué par un noeud de chaîne de blocs et comprenant :
dans un processus d'exécution d'une demande de transaction commerciale, l'appel (S110) d'un contrat Oracle pour générer une demande d'acquisition de nombres aléatoires ;
le traitement (S120) de la demande d'acquisition de nombres aléatoires par l'intermédiaire du contrat Oracle, et le fait d'amener au moins deux noeuds Oracle agencés à l'extérieur de la chaîne de blocs à générer des facteurs aléatoires sur la base de clés privées des au moins deux noeuds Oracle ;
l'acquisition (S130) des facteurs aléatoires retournés par les au moins deux noeuds Oracle par l'intermédiaire du contrat Oracle ;
la vérification d'une signature du facteur aléatoire de chacun des au moins deux noeuds Oracle à l'aide d'une clé publique de chacun des au moins deux noeuds Oracle par l'intermédiaire du contrat Oracle, dans lequel la signature est obtenue par la signature d'un paramètre de demande de la demande d'acquisition de nombres aléatoires et du facteur aléatoire par chacun des au moins deux noeuds Oracle à l'aide de la clé privée, et le paramètre de demande est un paramètre capable de caractériser la demande d'acquisition de nombres aléatoires ;
l'agrégation (S140) des facteurs aléatoires par l'intermédiaire du contrat Oracle pour former un facteur d'agrégation, et la génération d'un nombre aléatoire en fonction du facteur d'agrégation et d'un algorithme aléatoire sur chaîne ; et
le retour (S150) du nombre aléatoire à la demande de transaction commerciale par l'intermédiaire du contrat Oracle.

2. Procédé selon la revendication 1, dans lequel le traitement de la demande d'acquisition de nombres aléatoires par l'intermédiaire du contrat Oracle et le fait d'amener les au moins deux noeuds Oracle agencés à l'extérieur de la chaîne de blocs à générer les facteurs aléatoires sur la base des clés privées des au moins deux noeuds Oracle comprennent :
le traitement de la demande d'acquisition de nombres aléatoires par l'intermédiaire du contrat Oracle, la génération d'un journal d'événements et l'enregistrement du journal d'événements dans un bloc ;
dans lequel le journal d'événements est utilisé pour déclencher les au moins deux noeuds Oracle pour acquérir la demande d'acquisition de nombres aléatoires lorsque le journal d'événements est surveillé par les au moins deux noeuds Oracle et générer les facteurs aléatoires sur la base des clés privées des au moins deux noeuds Oracle.

3. Procédé selon la revendication 1, dans lequel le traitement de la demande d'acquisition de nombres aléatoires par l'intermédiaire du contrat Oracle comprend :
l'exécution de la demande d'acquisition de nombres aléatoires par l'intermédiaire du contrat Oracle pour déterminer un numéro de demande, des données de demande, une valeur de hachage de demande, une adresse de demandeur et une fonction de rappel ;
en conséquence, le retour du nombre aléatoire à la demande de transaction commerciale par l'intermédiaire du contrat Oracle comprend :
le retour du nombre aléatoire à la demande de transaction commerciale sur la base de la fonction de rappel par l'intermédiaire du contrat Oracle.

4. Procédé selon la revendication 1, dans lequel, dans le processus d'exécution de la demande de transaction commerciale, l'appel du contrat Oracle pour générer la demande d'acquisition de nombres aléatoires comprend :
dans un processus d'exécution de la demande de transaction commerciale par l'exécution d'un contrat intelligent commercial, l'appel du contrat Oracle en fonction d'une instruction d'appel du contrat Oracle pour générer la demande d'acquisition de nombres aléatoires.

5. Procédé selon la revendication 1, dans lequel l'acquisition des facteurs aléatoires retournés par les au moins deux noeuds Oracle par l'intermédiaire du contrat Oracle comprend :
l'acquisition de demandes de transaction de retour de facteurs aléatoires initiées par les au moins deux noeuds Oracle ; et
dans un processus d'exécution des demandes de transaction de retour de facteurs aléatoires, l'appel du contrat Oracle pour acquérir les facteurs aléatoires retournés par les au moins deux noeuds Oracle.

6. Procédé selon la revendication 1, avant d'amener les au moins deux noeuds Oracle agencés à l'extérieur de la chaîne de blocs à générer les facteurs aléatoires sur la base des clés privées des au moins deux noeuds Oracle, comprenant en outre :
l'acquisition de demandes de transaction d'inscription des au moins deux noeuds Oracle ; et
dans un processus d'exécution des demandes de transaction d'inscription, l'appel du contrat Oracle, l'acquisition, dans les demandes de transaction d'inscription, d'identités des au moins deux noeuds Oracle, d'un certificat de stockage de code d'un algorithme de génération de facteurs aléatoires, et de clés publiques des au moins deux noeuds Oracle, et la réalisation d'un stockage sur chaîne des identités des au moins deux noeuds Oracle, du certificat de stockage de code de l'algorithme de génération de facteurs aléatoires, et des clés publiques des au moins deux noeuds Oracle.

7. Appareil d'acquisition d'un nombre aléatoire pour une chaîne de blocs, comprenant :
un module de génération de demande d'acquisition de nombres aléatoires (210) qui est configuré pour, dans un processus d'exécution d'une demande de transaction commerciale, appeler un contrat Oracle pour générer une demande d'acquisition de nombres aléatoires ;
un module d'exécution de demande d'acquisition de nombres aléatoires (220) qui est configuré pour traiter la demande d'acquisition de nombres aléatoires par l'intermédiaire du contrat Oracle, et amener au moins deux noeuds Oracle agencés à l'extérieur de la chaîne de blocs à générer des facteurs aléatoires sur la base de clés privées des au moins deux noeuds Oracle ;
un module d'acquisition de facteurs aléatoires (230) qui est configuré pour acquérir les facteurs aléatoires retournés par les au moins deux noeuds Oracle par l'intermédiaire du contrat Oracle ;
un module de vérification de signature de facteur aléatoire qui est configuré pour vérifier une signature du facteur aléatoire de chacun des au moins deux noeuds Oracle à l'aide d'une clé publique de chacun des au moins deux noeuds Oracle par l'intermédiaire du contrat Oracle, dans lequel la signature est obtenue par la signature d'un paramètre de demande de la demande d'acquisition de nombres aléatoires et du facteur aléatoire par chacun des au moins deux noeuds Oracle à l'aide de la clé privée, et le paramètre de demande est un paramètre capable de caractériser la demande d'acquisition de nombres aléatoires ;
un module de génération de nombres aléatoires (240) qui est configuré pour agréger les facteurs aléatoires par l'intermédiaire du contrat Oracle pour former un facteur d'agrégation, et générer un nombre aléatoire en fonction du facteur d'agrégation et d'un algorithme aléatoire sur chaîne ; et
un module de retour de nombres aléatoires (250) qui est configuré pour retourner le nombre aléatoire à la demande de transaction commerciale par l'intermédiaire du contrat Oracle.

8. Appareil selon la revendication 7, dans lequel le module d'exécution de demande d'acquisition de nombres aléatoires (220) est en outre configuré pour :
traiter la demande d'acquisition de nombres aléatoires par l'intermédiaire du contrat Oracle, générer un journal d'événements et enregistrer le journal d'événements dans un bloc ;
dans lequel le journal d'événements est utilisé pour déclencher les au moins deux noeuds Oracle pour acquérir la demande d'acquisition de nombres aléatoires lorsque le journal d'événements est surveillé par les au moins deux noeuds Oracle et générer les facteurs aléatoires sur la base des clés privées des au moins deux noeuds Oracle.

9. Appareil selon la revendication 7, dans lequel le module d'exécution de demande d'acquisition de nombres aléatoires (220) traite la demande d'acquisition de nombres aléatoires par l'intermédiaire du contrat Oracle par l'exécution de la demande d'acquisition de nombres aléatoires par l'intermédiaire du contrat Oracle pour déterminer un numéro de demande, des données de demande, une valeur de hachage de demande, une adresse de demandeur et une fonction de rappel ;
en conséquence, le module de retour de nombres aléatoires (250) est en outre configuré pour retourner le nombre aléatoire à la demande de transaction commerciale sur la base de la fonction de rappel par l'intermédiaire du contrat Oracle.

10. Appareil selon la revendication 7, dans lequel le module de génération de demande d'acquisition de nombres aléatoires (210) est en outre configuré pour :
dans un processus d'exécution de la demande de transaction commerciale par l'exécution d'un contrat intelligent commercial, appeler le contrat Oracle en fonction d'une instruction d'appel du contrat Oracle pour générer la demande d'acquisition de nombres aléatoires.

11. Appareil selon la revendication 7, dans lequel le module d'acquisition de facteurs aléatoires (230) est en outre configuré pour :
acquérir des demandes de transaction de retour de facteurs aléatoires initiées par les au moins deux noeuds Oracle ; et
dans un processus d'exécution des demandes de transaction de retour de facteurs aléatoires, appeler le contrat Oracle pour acquérir les facteurs aléatoires retournés par les au moins deux noeuds Oracle.

12. Appareil selon la revendication 7, comprenant en outre un module d'inscription de noeuds Oracle qui est configuré pour :
acquérir des demandes de transaction d'inscription des au moins deux noeuds Oracle ; et
dans un processus d'exécution des demandes de transaction d'inscription, appeler le contrat Oracle, acquérir, dans les demandes de transaction d'inscription, des identités des au moins deux noeuds Oracle, un certificat de stockage de code d'un algorithme de génération de facteurs aléatoires, et des clés publiques des au moins deux noeuds Oracle, et réaliser un stockage sur chaîne des identités des au moins deux noeuds Oracle, du certificat de stockage de code de l'algorithme de génération de facteurs aléatoires, et des clés publiques des au moins deux noeuds Oracle.

13. Dispositif électronique, comprenant :
au moins un processeur et
une mémoire reliée en communication à l'au moins un processeur ;
dans lequel la mémoire stocke une instruction exécutable par l'au moins un processeur, et l'instruction est exécutée par l'au moins un processeur pour permettre à l'au moins un processeur de réaliser le procédé d'acquisition d'un nombre aléatoire pour une chaîne de blocs selon l'une quelconque des revendications 1 à 6.

14. Support de stockage lisible par ordinateur stockant des instructions d'ordinateur, dans lequel les instructions d'ordinateur sont utilisées pour permettre à un ordinateur de réaliser le procédé d'acquisition d'un nombre aléatoire pour une chaîne de blocs selon l'une quelconque des revendications 1 à 6.
